# EUROPEAN PATENT APPLICATION

(11) **EP 4 790 447 A1**
(43) Date of publication of application: **12.08.2026**
(21) Application number: 24874333.8
(22) Date of filing: 24.07.2024
(51) Int. Cl.: G01S 7/38, G01S 7/36, G01S 13/24

(54) **MULTI-TONE RADAR AND TRANSMISSION/RECEPTION METHOD**

(30) Priority: 02.10.2023 JP 2023171600
(71) Applicant: MITSUBISHI ELECTRIC CORPORATION, Chiyoda-ku Tokyo 100-8310 (JP)
(72) Inventor: KIYOSAWA Tsuyoshi, Tokyo 141-0032 (JP)
(74) Representative: Mewburn Ellis LLP
(86) International application number: PCT/JP2024/026531
(87) International publication number: WO 2025/074718

(57) **Abstract**

A multi-tone radar (100) is a multi-tone radar for transmitting a multi-tone signal as a radar signal and a jamming signal for jamming a radar wave of concern, and receiving a multi-tone signal containing the radar signal reflected from a target as an echo signal. The multi-tone radar (100) includes a plurality of split circuits (#1 to #n), each of the plurality of split circuits (#1 to #n) transmitting a multi-tone signal within a corresponding frequency range among a plurality of frequency ranges resulting from dividing a transmission-reception frequency range of the multi-tone radar. The plurality of split circuits (#1 to #n) include a radar-use split circuit to transmit the multi-tone signal as the radar signal, and a jamming-use split circuit to transmit the multi-tone signal as the jamming signal.

## Description

### Technical Field

The present disclosure relates to a multi-tone radar and a transmission-reception method.

### Background Art

The improved performance of digital components has recently increased the bandwidth of radars and electronic warfare (EW) systems. Since radars and EW systems are generally developed separately, for example, when radar and EW systems are installed in an aircraft, the scale of the avionics hardware as a whole becomes large, and a device to integrate those components is also necessary.

For example, Patent Literature 1 describes a wideband radar that includes a transmitter to transmit a wideband signal and a receiver to receive a reflected wave of the wideband signal transmitted from the transmitter. The wideband radar detects a target based on a result acquired by synthesizing the bandwidths of sub-band signals, other than interfering sub-band signals, with different frequency bands in the reflected wave received by the receiver.

### Citation List

### Patent Literature

Patent Literature 1: Unexamined Japanese Patent Application Publication No. 2009-8452

### Summary of Invention

### Technical Problem

The wideband radar disclosed in Patent Literature 1 is a device designed to remove unwanted waves and is not capable of transmitting jamming waves. Therefore, in order to achieve jamming against wideband radars of concern using this wideband radar, it is necessary to have a separate EW system that transmits wideband jamming waves, as well as a device to integrate those components, which results in an increase in the overall hardware scale.

In response to the above issue, an objective of the present disclosure is to expand the bandwidth of a radar and an EW system and suppress an increase in the overall hardware scale.

### Solution to Problem

To achieve the above objective, a multi-tone radar according to an aspect of the present disclosure is a multi-tone radar for transmitting a multi-tone signal as a radar signal and a jamming signal for jamming a radar wave of concern, and receiving a multi-tone signal containing the radar signal reflected from a target as an echo signal. The multi-tone radar includes a plurality of split circuits. The plurality of split circuits each transmit a multi-tone signal within a corresponding frequency range among a plurality of frequency ranges resulting from dividing a transmission-reception frequency range of the multi-tone radar. The plurality of split circuits include a radar-use split circuit to transmit the multi-tone signal as the radar signal, and a jamming-use split circuit to transmit the multi-tone signal as the jamming signal.

### Advantageous Effects of Invention

The multi-tone radar according to the above aspect of the present disclosure includes the split circuits each corresponding to a frequency range among the plurality of frequency ranges resulting from dividing the transmission-reception frequency range of the multi-tone radar, and the split circuits include the radar-use split circuit and the jamming-use split circuit, which allows expanding the bandwidth of the radar and the EW system and suppressing the increase in the overall hardware scale.

### Brief Description of Drawings

FIG. 1 is a diagram of a multi-tone radar according to Embodiment 1 illustrating an example structure;
FIG. 2 is a diagram of a frequency range of a bandpass filter (BPF) for a wideband in Embodiment 1;
FIG. 3 is a diagram of a frequency range of a BPF for a narrowband in Embodiment 1;
FIG. 4 is a diagram illustrating frequency hopping of a radar signal in the multi-tone radar according to Embodiment 1;
FIG. 5 is a diagram of an integration processing circuit in Embodiment 1 illustrating an example structure;
FIG. 6 is a diagram illustrating ECCM effects of the multi-tone radar according to Embodiment 1;
FIG. 7 is a flowchart of target detection performed in Embodiment 1;
FIG. 8 is a conceptual diagram illustrating jamming waves and radar waves of a multi-tone radar according to Embodiment 2;
FIG. 9 is a diagram illustrating an example of assigning a multi-tone signal as a jamming signal in Embodiment 2;
FIG. 10 is a table illustrating the uses of the multi-tone radar according to Embodiment 2 and assignment of multi-tone signals;
FIG. 11 is a diagram of the multi-tone radar according to Embodiment 2 used as a radar and for power jamming;
FIG. 12 is a diagram of an integration processing circuit in the multi-tone radar according to Embodiment 2 used as a radar and for power jamming;
FIG. 13 is a diagram of the multi-tone radar according to Embodiment 2 used as a radar and for power jamming and deception jamming; and
FIG. 14 is a diagram of an integration processing circuit in the multi-tone radar according to Embodiment 2 used as a radar and for power jamming and deception jamming.

### Description of Embodiments

A multi-tone radar according to one or more embodiments of the present disclosure is described below in detail with reference to the drawings. In the drawings, the same reference signs denote the same or equivalent components, and such components are basically not described repeatedly. A multi-tone radar is a radar that transmits a multi-tone signal as a radar signal, and receives a multi-tone signal containing the radar signal reflected from a target as an echo signal to detect the target based on the echo signal. The multi-tone signal corresponds to multiple signals transmitted concurrently. An antonym of the multi-tone signal is a multi-spot signal. The multi-spot signal corresponds to a single tone transmitted instantly.

### Embodiment 1

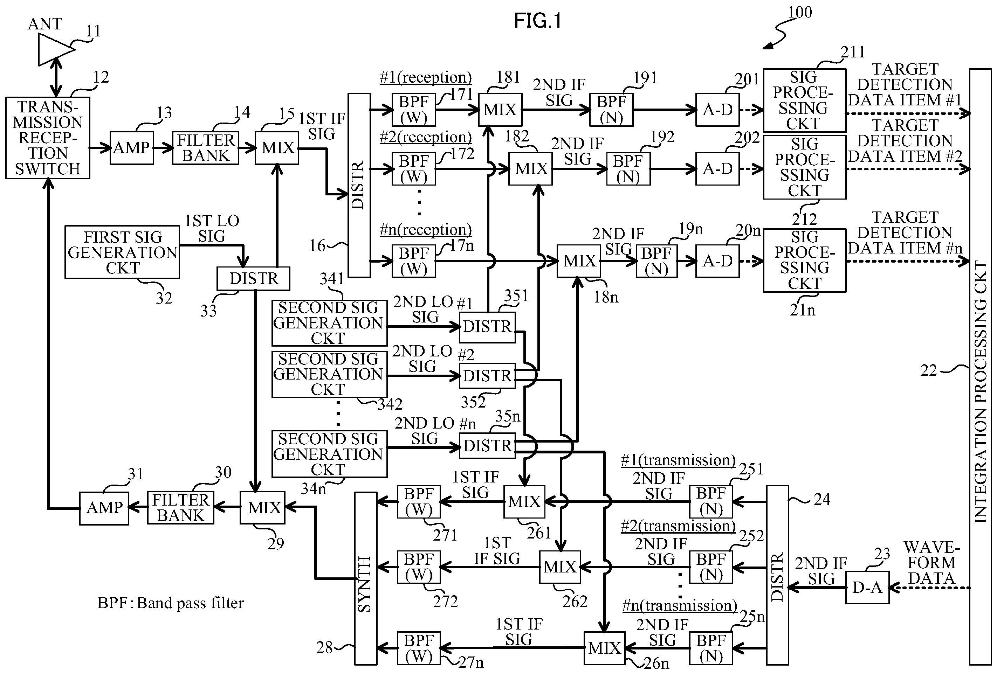

FIG. 1 is a diagram of a multi-tone radar 100 according to Embodiment 1 illustrating an example structure. To achieve a transmission-reception bandwidth fully wider than a transmission-reception bandwidth of an electronic countermeasure (ECM) device, the multi-tone radar 100 includes multiple wideband radio frequency (RF) circuits arranged to divide the transmission-reception frequency range. The wideband RF circuits having the divided frequency ranges of the multi-tone radar 100 include RF circuits in a transmission system that are hereafter referred to as split circuits (transmission) and RF circuits in a reception system that are hereafter referred to as split circuits (reception). The split circuits (transmission) and the split circuits (reception) are simply referred to as split circuits collectively.

The multi-tone radar 100 transmits a multi-tone signal as a radar signal, and receives a multi-tone signal containing the radar signal reflected from a target as an echo signal. For enhanced ECCM effects, the multi-tone radar 100 assigns one tone of the multi-tone signal to each split circuit for transmission and reception, and extracts and accepts, from target detection results from signal processing in the split circuits, a target detection result unaffected by jamming waves of concern. The multi-tone radar 100 implements frequency hopping or frequency agility of each multi-tone signal to enhance the ECCM effects. In the figure, the straight arrows indicate analogue signals (RF signals or intermediate frequency or IF signals), and the broken arrows indicate digital signals (data).

The reception system in the multi-tone radar 100 is described first. An echo signal received by an antenna 11 passes through a transmission-reception switch 12 and is amplified by an amplifier 13. The amplified echo signal is limited to a set frequency band by a filter bank 14 that determines the transmission-reception band of the multi-tone radar 100, and converted by a mixer 15 to a first IF signal using a first local oscillator (Lo) signal. The first IF signal output from the mixer 15 is distributed to split circuits (reception) #1 to #n by a distributor 16. In the figure, the split circuits (reception) #1 to #n are indicated as #1 (reception) to #n (reception), where n is the number of divisions, or the number of multi-tone signals. Hereafter, the multi-tone signals are referred to as multi-tone signals #1 to #n, and the split circuits corresponding to the multi-tone signals #1 to #n are referred to as split circuits #1 to #n. The first IF signal is an example of a first intermediate frequency signal.

After being distributed, the first IF signal is band-limited by bandpass filters (BPFs) (wide) 171 to 17n in the split circuits (reception). The BPFs (wide) 171 to 17n are hereafter referred to as BPFs (wide) 17 collectively. The band limited by each of the BPFs (wide) 17 is a wide bandwidth that defines the hopping range and the agility range of each tone of the multi-tone signal.

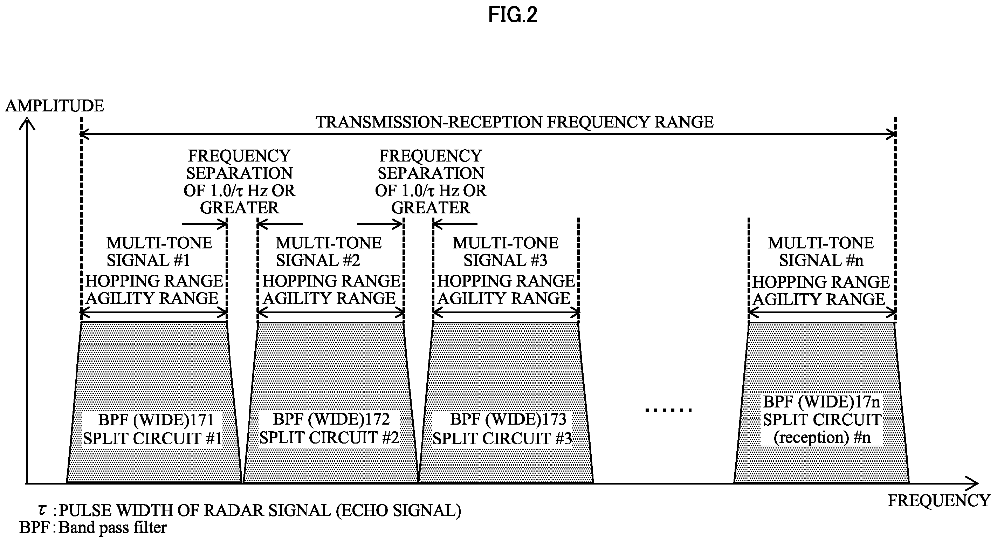

With reference to FIG. 2, the frequency ranges of the BPFs (wide) 171 to 17n are described. As illustrated in FIG. 2, the transmission-reception frequency range of the multi-tone radar 100 is divided into the frequency ranges of the BPFs (wide) 171 to 17n corresponding to the split circuits #1 to #n. The frequency ranges of the BPFs (wide) 171 to 17n correspond to the hopping ranges and the agility ranges of the respective multi-tone signals #1 to #n, and do not overlap the bands of other split circuits. More specifically, the frequency separation between adjacent BPFs (wide) 17 is set to be greater than or equal to 1.0/τ Hz, where τ is the pulse width of the radar signal (echo signal). With this setting, each split circuit is not affected by the spread of the spectrum at the end of the band of an adjacent split circuit. When the split circuits with the frequency separation being set as above are affected by the spread of the spectrum at the end of the band of an adjacent split circuit due to the characteristics of the components or when interference with other communication devices is to be avoided, for example, the frequency separation may be increased sufficiently.

As illustrated in FIG. 1, the first IF signal that is band-limited by each of the BPFs (wide) 171 to 17n in the corresponding split circuit (reception) is converted by the corresponding one of mixers 181 to 18n to a second IF signal using a second Lo signal. The second IF signals output from the mixers 181 to 18n are band-limited by the BPFs (narrow) 191 to 19n that define an instant reception band of the radar. The second IF signal is an example of a second intermediate frequency signal.

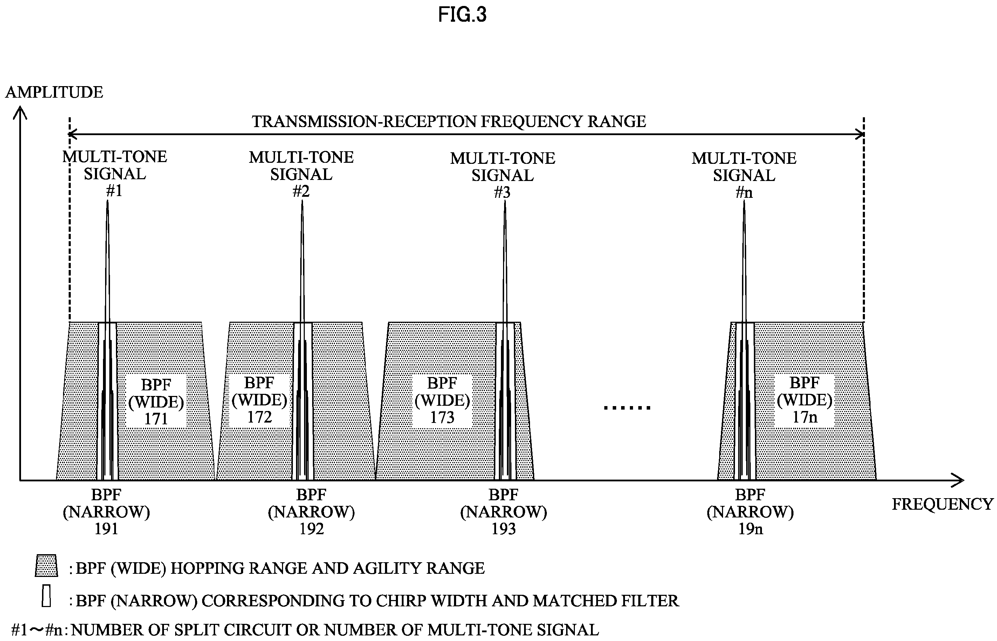

The frequency ranges of the BPFs (narrow) 191 to 19n are described with reference to FIG. 3. As illustrated in FIG. 3, the frequency ranges of the BPFs (narrow) 191 to 19n corresponding to the split circuits #1 to #n are narrowbands corresponding to a chirp width and a matched filter. The second Lo frequency is controlled for each split circuit to change the hopping frequency and the agility frequency within the range of the corresponding one of the BPFs (wide) 171 to 17n.

As illustrated in FIG. 1, the second IF signals that have passed through the BPFs (narrow) 191 to 19n are AD-converted by A-D converters 201 to 20n, and output to signal processing circuits 211 to 21n. The AD-converted signals are used for signal processing to detect the target with the signal processing circuits 211 to 21n. Target detection data items #1 to #n indicating target detection results are output to an integration processing circuit 22. The process performed by the integration processing circuit 22 is described later.

The transmission system of the multi-tone radar 100 is now described. When radar-use waveform data is output from the integration processing circuit 22, the waveform data is DA-converted by a D-A converter 23 and is output as a second IF signal. The radar-use waveform data includes, for example, a chirp waveform, a barker code, a frequency modulated continuous wave (FMCW), and a pulse. The second IF signal output from the D-A converter 23 is distributed to the split circuits (transmission) #1 to #n by a distributor 24. In the figure, the split circuits (transmission) #1 to #n are indicated as #1 (transmission) to #n (transmission). The distributed second IF signal is band-limited by BPFs (narrow) 251 to 25n. The BPFs (narrow) 251 to 25n in the transmission system are the same as the BPFs (narrow) 191 to 19n in the reception system.

The second IF signals that have passed through the BPFs (narrow) 251 to 25n are converted to first IF signals by mixers 261 to 26n with a second Lo signal and band-limited by BPFs (wide) 271 to 27n. The BPFs (wide) 271 to 27n in the transmission system are the same as the BPFs (wide) 171 to 17n in the reception system. The BPFs (wide) 271 to 27n are hereafter collectively referred to as BPFs (wide) 27.

The first IF signals that have passed through the BPFs (wide) 271 to 27n are synthesized by a synthesizer 28 into a multi-tone signal, and converted to an RF signal by a mixer 29 using a first Lo signal. The RF signal is limited to a set frequency band by a filter bank 30 that determines the transmission-reception band of the multi-tone radar 100, and then amplified by an amplifier 31. The amplified RF signal passes through the transmission-reception switch 12 and is transmitted from the antenna 11 as a radar signal. The filter bank 30 in the transmission system is the same as the filter bank 14 in the reception system. The transmission-reception switch 12 switches the antenna 11 between transmission and reception.

A signal generation circuit is now described. The multi-tone radar 100 includes and controls a first signal generation circuit 32 and second signal generation circuits 341 to 34n, where n is the number of divisions, or the number of multi-tone signals. The first signal generation circuit 32 generates a first Lo signal for frequency conversion performed by the multi-tone radar 100. The first Lo signal generated by the first signal generation circuit 32 is distributed by a distributor 33 and input into the mixer 15 in the reception system and the mixer 29 in the transmission system. The first Lo signal generated by the first signal generation circuit 32 is a local signal common to the multi-tone signals (split circuits), and thus has a tuning frequency within the transmission-reception frequency range of the multi-tone radar 100. More specifically, the transmission-reception frequency range of the multi-tone radar 100 is defined by the first Lo signal. The first Lo signal is an example of a first local signal. The mixer 15 in the reception system and the mixer 29 in the transmission system are each an example of a mixer common to the plurality of split circuits.

The second signal generation circuits 341 to 34n generate second Lo signals #1 to #n for frequency conversion performed by the multi-tone radar 100. The second Lo signals #1 to #n generated by the second signal generation circuits 341 to 34n are distributed by distributors 351 to 35n and input into the mixers 181 to 18n in the reception system and the mixers 261 to 26n in the transmission system. The second Lo signals #1 to #n generated by the second signal generation circuits 341 to 34n are local signals for the individual multi-tone signals (split circuits). The second Lo signals #1 to #n thus define the frequency ranges of the respective split circuits corresponding to the frequency ranges resulting from dividing the transmission-reception frequency range of the multi-tone radar 100. The second Lo signals are each an example of a second local signal. The mixers 181 to 18n in the reception system and the mixers 261 to 26n in the transmission system are each an example of an individual mixer for a corresponding split circuit of the plurality of split circuits.

In the present embodiment, the second Lo frequency is individually controlled for each split circuit to assign, to the split circuit, one of the frequency ranges resulting from dividing the transmission-reception frequency range of the multi-tone radar 100. The second IF frequencies of all the split circuits are in the same frequency ranges. Thus, the A-D converters 201 to 20n and the D-A converter 23 have the same performance for each split circuit without involving upsampling of frequency. The bandwidth can thus be expanded using existing components.

Frequency hopping and frequency agility of the multi-tone signals implemented by the multi-tone radar 100 are described now. The multi-tone radar 100 implements frequency hopping or frequency agility of each multi-tone signal by varying the first Lo signal generated by the first signal generation circuit 32. The multi-tone signal undergoing a frequency hopping or frequency agility operation is less susceptible to jamming waves of concern, thus achieving enhanced ECCM effects. However, the first Lo signal generated by the first signal generation circuit 32 is a local signal common to the multi-tone signals, and the frequencies of the multi-tone signals vary similarly through hopping and agility operations.

The multi-tone radar 100 implements frequency hopping or frequency agility of individual multi-tone signals by varying the second Lo signals #1 to #n generated by the second signal generation circuits 341 to 34n. In this case, the frequency variation of the multi-tone signals can be controlled individually, unlike the case in which the first Lo signal generated by the first signal generation circuit 32 is used for frequency hopping and frequency agility operations. Thus, varying the second Lo signals #1 to #n generated by the second signal generation circuits 341 to 34n for implementing frequency hopping and frequency agility more effectively enhances ECCM effects. In the present embodiment, the multi-tone radar 100 thus varies the second Lo signals #1 to #n to implement frequency hopping and frequency agility.

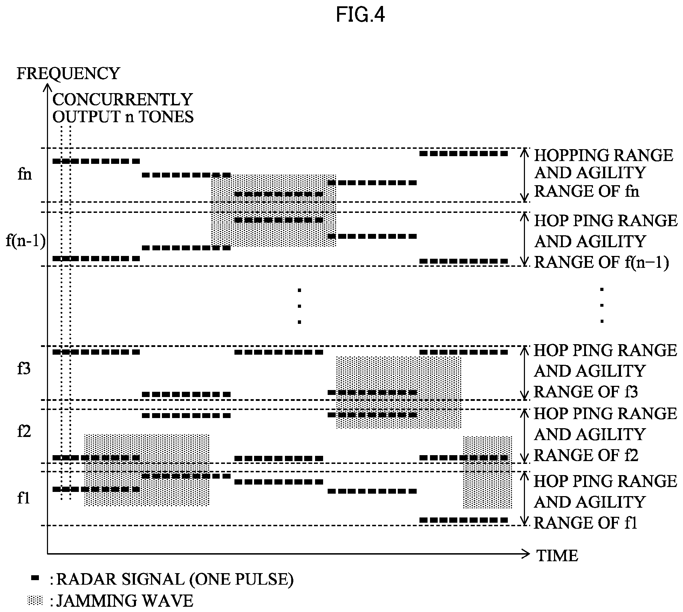

The frequency hopping and the frequency agility implemented with varying the second Lo signals #1 to #n are described in detail with reference to FIG. 4. In the example in FIG. 4, the second Lo signals #1 to #n generated by the second signal generation circuits 341 to 34n are varied to individually subject multi-tone signals f1 to fn to frequency hopping. In the example in FIG. 4, the frequencies of the multi-tone signals f1 to fn are changed at multiple pulse intervals. For the frequency agility, the frequencies are changed for each pulse. When the frequency hopping or the frequency agility is implemented individually for the multi-tone signals, the multi-tone signals are less susceptible to jamming waves of concern and achieve enhanced ECCM effects.

As illustrated in FIG. 1, when n multi-tone signals are transmitted from the antenna 11 as radar signals and reflected from the target, the n multi-tone signals are received by the antenna 11 as echo signals. The echo signals are distributed by the distributor 16 to the split circuits (reception) #1 to #n, each corresponding to one tone of the multi-tone signals, and processed by the signal processing circuits 211 to 21n to detect the target. When the antenna 11 receives jamming waves of concern together with the echo signal, the signal processing circuits 211 to 21n detect jamming. When the signal processing result indicates detection of a target and non-detection of jamming, the signal processing circuits 211 to 21n each output the target detection data item to the integration processing circuit 22. When the signal processing result indicates non-detection of a target or detection of a target and jamming, the signal processing circuits 211 to 21n each reject the target detection data item. More specifically, the target detection data item output to the integration processing circuit 22 is constantly the target detection data item indicating that a target is detected and jamming is not detected.

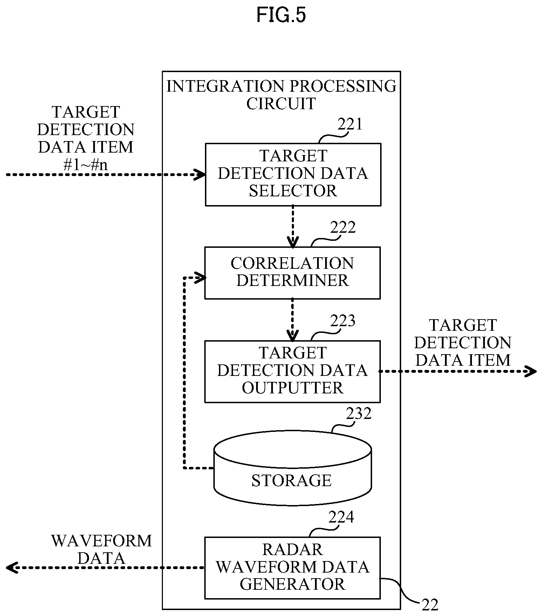

An example structure of the integration processing circuit 22 is described now with reference to FIG. 5. The integration processing circuit 22 includes a target detection data selector 221 that selects at least one of the target detection data items #1 to #n output from the signal processing circuits 211 to 21n, a correlation determiner 222 that performs correlation determination on each selected target detection data item and accepts a target detection data item that satisfies a predetermined correlation condition, a target detection data outputter 223 that outputs the accepted target detection data item, and a storage 232 that stores information data. In the correlation determination, the correlation determiner 222 performs correlation determination between each selected target detection data item and the corresponding past target detection data item, rejects a target detection data item that does not satisfy the correlation condition associated with at least one of, for example, the bearing, the distance, the velocity, or the travel direction of the target and accepts a target detection data item that satisfies the correlation condition. For example, the correlation determiner 222 determines at least one of, for example, the bearing, the distance, the velocity, or the travel direction of the target based on correlation between the selected target detection data item and the past target detection data item, and defines, as the correlation condition, a condition that the difference from the previously determined value of at least one of, for example, the bearing, the distance, the velocity, or the travel direction is within a predetermined threshold. The storage 232 is, for example, a semiconductor memory, a flash memory, or a magnetic disk and stores information data used for the correlation determination. For example, the target detection data is stored in the storage 232. The target detection data items may be prestored. The target detection data items input into the integration processing circuit 22 as appropriate may be stored.

For example, the correlation determiner 222 may receive multiple target detection data items sequentially and accept, of the multiple target detection data items, the earliest target detection data item that satisfies the correlation condition, or may randomly accept one of the target detection data items that satisfy the correlation condition. The target detection data item may be output, for example, on the screen to be displayed, or to an external device or system. The integration processing circuit 22 further includes a radar waveform data generator 224 that generates the above radar-use waveform data. The radar waveform data generator 224 outputs the generated radar-use waveform data to the D-A converter 23.

Jamming detection is now described more specifically. For example, the antenna 11 receives power jamming as an example of jamming. When receiving high power jamming caused by, for example, continuous waves, noise waves, or sweep waves, the antenna 11 cannot detect multi-tone signals reflected from the target although the antenna 11 receives signals. More specifically, the process signal circuits 211 to 21n determine detection of jamming when the intensity of reception signals exceeds a threshold and any multi-tone signal reflected from the target cannot be detected. The antenna 11 may also receive deception jamming as an example of jamming. In addition to multi-tone signals reflected from the target, the antenna 11 receives multi-tone signals for multiple false targets. When the number of detected echo signals or multi-tone signals increases, the process signal circuits 211 to 21n determine detection of jamming. The multi-tone signals for false targets may indicate different bearings, distances, velocities, and travel directions of the target for each signal reception. The correlation determiner 222 rejects the target detection data items that differ in each signal reception and do not satisfy the correlation condition, and determines the data items as deception jamming. For example, the antenna 11 may receive jamming signals that match the multi-tone signals reflected from the target. When the multi-tone signals reflected from the target match the jamming signals, the correlation determiner 222 that determines whether each target detection data item of the selected split circuit satisfies the correlation condition cannot easily detect the target detection data item as jamming. The correlation determiner 222 thus performs correlation determination including determining whether each target detection data item of the selected split circuit satisfies the correlation condition, and whether each target detection data item satisfies the correlation condition with the target detection data item of another selected split circuit. The correlation determiner 222 performs correlation determination involving comparison between target detection data items of multiple split circuits. A jamming signal matching a multi-tone signal can thus be detected.

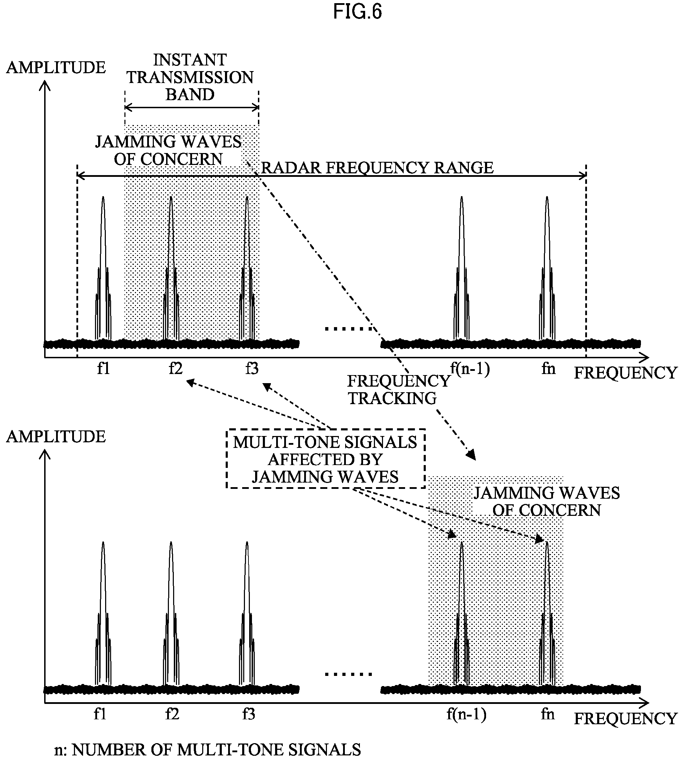

As described above, the multi-tone radar 100 performs target detection using multi-tone signals unaffected by jamming waves of concern to achieve enhanced ECCM effects. The ECCM effects produced by the multi-tone radar are described with reference to FIG. 6. As illustrated in FIG. 6, the multi-tone output frequency range of the multi-tone radar 100 is sufficiently wider than the instant transmission band of jamming waves of concern from an ECM device. Thus, at least one tone of the multi-tone signals f1 to fn remains unaffected by jamming when the ECM device tracks the frequency of a radar signal for jamming. In the example in FIG. 6, an ECM device tracks the frequency of a radar signal. This frequency tracking causes a transition from the state in which the multi-tone signals f2 and f3 are affected by jamming to the state in which the multi-tone signals f(n-1) and fn are affected by jamming. However, at least one multi-tone signal constantly remains unaffected by jamming. The multi-tone radar 100 performs target detection on each multi-tone signal and accepts a target detection data item resulting from signal processing performed on a multi-tone signal unaffected by jamming. The multi-tone radar 100 can thus continue stable target detection when a jamming frequency shifts rapidly in response to the radar frequency.

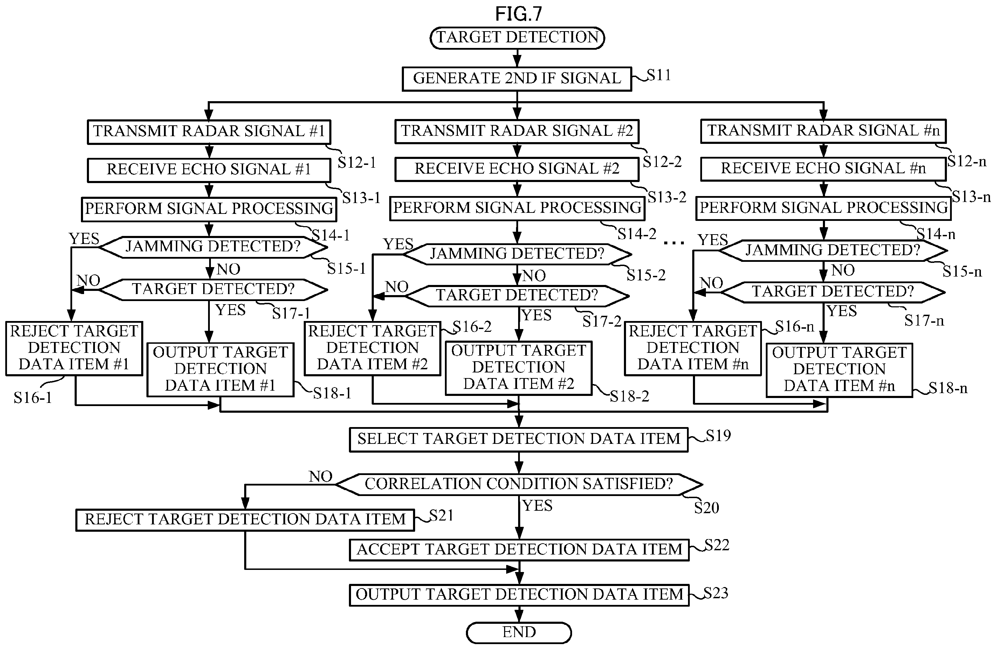

The target detection performed by the multi-tone radar 100 is now described with reference to FIG. 7. The target detection starts when the multi-tone radar 100 is activated. The D-A converter 23 DA-converts the radar-use waveform data output from the integration processing circuit 22 and generates a second IF signal (step S11). The second IF signal is distributed by the distributor 24 to the split circuits (transmission) #1 to #n. The split circuit (transmission) #1 converts the frequency of the distributed second IF signal and transmits a radar signal #1 from the antenna 11 (step S12-1). The split circuit (reception) #1 receives, from the antenna 11, an echo signal #1 that is the radar signal #1 reflected from the target (step S13-1). The signal processing circuit 211 converts the frequency of the echo signal #1, processes the echo signal #1 based on an AD-converted digital signal (step S14-1), and generates a target detection data item #1 indicating a target detection result. When detecting jamming from the signal processing result (Yes in step S15-1), the signal processing circuit 211 rejects the target detection data item #1 (step S16-1). When not detecting jamming (No in step S15-1), the signal processing circuit 211 determines whether the target is detected (step S17-1). When not detecting the target (No in step S17-1), the signal processing circuit 211 rejects the target detection data item #1 (step S16-1). When detecting the target (Yes in step S17-1), the signal processing circuit 211 outputs the target detection data item #1 to the integration processing circuit 22 (step S18-1).

The split circuit (transmission) #2 converts the frequency of the distributed second IF signal and transmits a radar signal #2 from the antenna 11 (step S12-2). The split circuit (reception) #2 receives, from the antenna 11, an echo signal #2 that is the radar signal #2 reflected from the target (step S13-2). A signal processing circuit 212 converts the frequency of the echo signal #2, processes the echo signal #2 based on an AD-converted digital signal (step S14-2), and generates a target detection data item #2 indicating a target detection result. When detecting jamming from the signal processing result (Yes in step S15-2), the signal processing circuit 211 rejects the target detection data item #2 (step S16-2). When not detecting jamming (No in step S15-2), the signal processing circuit 212 determines whether the target is detected (step S17-2). When not detecting the target (No in step S17-2), the signal processing circuit 212 rejects the target detection data item #2 (step S16-2). When detecting the target (Yes in step S17-2), the signal processing circuit 212 outputs the target detection data item #2 to the integration processing circuit 22 (step S18-2).

The split circuit (transmission) #n converts the frequency of the distributed second IF signal and transmits a radar signal #n from the antenna 11 (step S12-n). The split circuit (reception) #n receives, from the antenna 11, an echo signal #n that is the radar signal #n reflected from the target (step S13-n). The signal processing circuit 211 converts the frequency of the echo signal #n, processes the echo signal #n based on an AD-converted digital signal (step S14-n), and generates a target detection data item #n indicating a target detection result. When detecting jamming from the signal processing result (Yes in step S15-n), the signal processing circuit 211 rejects the target detection data item #n (step S16-n). When not detecting jamming (No in step S15-n), the signal processing circuit 21n determines whether the target is detected (step S17-n). When not detecting the target (No in step S17-n), the signal processing circuit 21n rejects the target detection data item #n (step S16-n). When detecting the target (Yes in step S17-n), the signal processing circuit 21n outputs the target detection data item #n to the integration processing circuit 22 (step S18-n). The split circuits (transmission) #3 to #n-1 also perform the same process.

The target detection data selector 221 in the integration processing circuit 22 selects at least one of the target detection data items #1 to #n output from the signal processing circuits 211 to 21n (step S19). The correlation determiner 222 performs correlation determination including determining whether each selected target detection data item satisfies the correlation condition and whether each selected target detection data item satisfies the correlation condition with the target detection data item of another selected split circuit (step S20). When the correlation condition is not satisfied (No in step S20), the correlation determiner 222 rejects the target detection data item (step S21). When the correlation condition is satisfied (Yes in step S20), the correlation determiner 222 accepts the target detection data item (step S22). The target detection data outputter 223 outputs the accepted target detection data item (step S23), and the process ends.

As described above, the multi-tone radar according to Embodiment 1 includes split circuits corresponding to multiple frequency ranges resulting from dividing the transmission-reception frequency range of the multi-tone radar. The multi-tone radar implements frequency hopping or frequency agility of a radar signal within the frequency ranges of the split circuits, detects a target and jamming based on an echo signal in each split circuit to generate target detection data items, and selects the target detection data item of the split circuit indicating detection of the target and non-detection of jamming. Thus, the multi-tone radar can have a wider bandwidth and stably detect a target when a jamming frequency shifts rapidly in response to the radar frequency. The components upstream from the distributor 16 in the reception system and the components downstream from the synthesizer 28 in the transmission system are used in common between the split circuits. This structure can avoid an increase in the circuit scale resulting from expansion of the bandwidth.

### Embodiment 2

In Embodiment 1, the multi-tone radar 100 is used simply as a radar, but in Embodiment 2, the multi-tone radar 100 is used as a radar and for jamming. In addition to the operation performed in Embodiment 1, the multi-tone radar 100 according to Embodiment 2 receives a notification indicating a search result of a radar wave of concern from an electronic support measures (ESM) device or a radar warning receiver (RWR) device installed on the platform of the multi-tone radar 100, and assigns, as jamming signals for a radar of concern, one or more tones of the multi-tone signals used as radar signals. The search result of the radar wave of concern includes the frequency of the radar wave of concern.

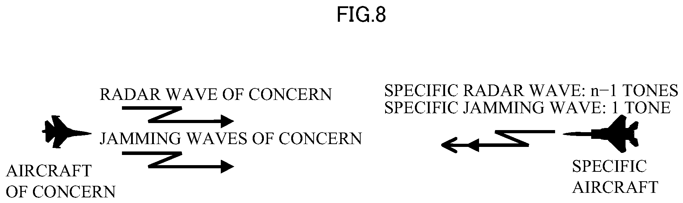

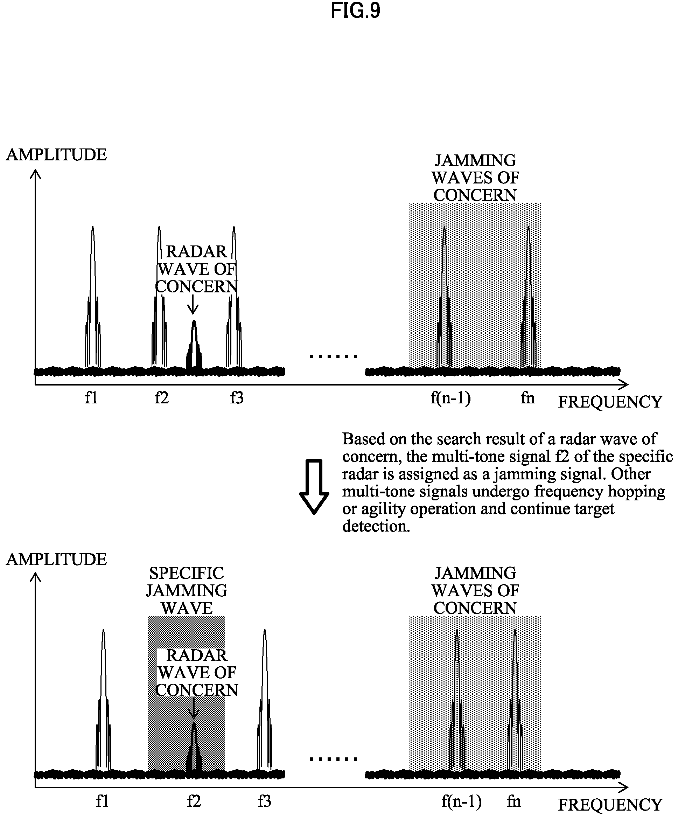

In the example described with reference to FIGS. 8 and 9, an aircraft on which the multi-tone radar 100 is installed has radar and jamming functions in which one or more of the multi-tone signals are assigned as jamming signals for a radar of concern.

In the example in FIG. 8, the multi-tone radar 100 installed on a specific aircraft assigns one tone of the multi-tone signals used as radar signals as jamming signals. When an ESM device or a RWR device installed on the specific aircraft detects a radar wave of concern and informs the multi-tone radar 100 of the search result, the multi-tone radar 100 tunes a multi-tone signal in a frequency range including the frequency of the radar wave of concern to the radar wave of concern, implements a jamming technique for the multi-tone signal, and transmits the multi-tone signal. The jamming technique usable when assigning a multi-tone signal as a jamming signal is power jamming, or specifically, increasing the noise power of a receiver in a radar on an aircraft of concern to degrade the signal-to-noise (SN) ratio.

In the example in FIG. 9, the frequency of a radar wave of concern included in the search result of the radar wave of concern is included in the frequency range of a multi-tone signal f2. Thus, the multi-tone signal f2 is assigned as a jamming signal, and a specific jamming wave is transmitted against the radar wave of concern. One or more tones of the multi-tone signals may simply be tuned to the frequency of the radar wave of concern, without a jamming technique being implemented, to possibly achieve deception jamming, or specifically, causing the radar of concern to detect a false position of the specific aircraft.

When one or more tones of the multi-tone signals used as radar signals are assigned as jamming signals, the second Lo signals of the split circuits assigned with the jamming signals are used as local signals for superimposing a jamming wave or a signal for a power jamming technique such as noise or sweep, or radar-use waveform data is switched to jamming-use waveform data. With this method for generating a jamming signal, the jamming function of the multi-tone radar 100 is basically limited to power jamming, but the multi-tone radar 100 can perform deception jamming in addition to power jamming by additionally including a jamming-dedicated split circuit.

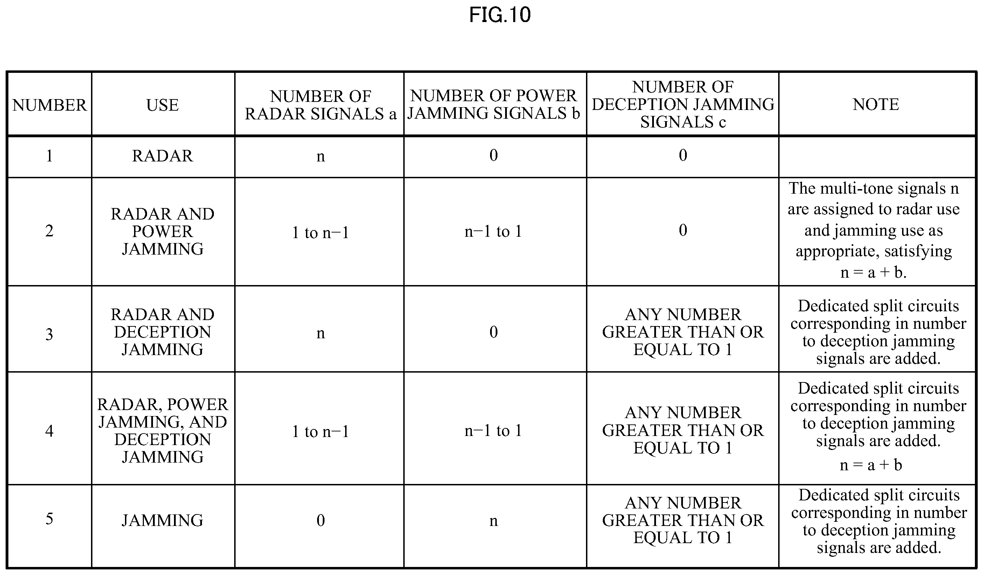

FIG. 10 illustrates the uses of the multi-tone radar 100 and assignment of multi-tone signals. As illustrated in FIG. 10, when the multi-tone radar 100 is used simply as a radar, the number of radar signals a is n, the number of power jamming signals b is 0, and the number of deception jamming signals c is 0. When the multi-tone radar 100 is used as a radar and for power jamming, the number of radar signals a is 1 to n-1, the number of power jamming signals b is n-1 to 1, and the number of deception jamming signals c is 0. In this case, the multi-tone signals n are assigned to the radar and power jamming uses, and thus have the relationship of n = a + b, where a is the number of radar signals and b is the number of power jamming signals. When the multi-tone radar 100 is used as a radar and for deception jamming, the number of radar signals a is n, the number of power jamming signals b is 0, and the number of deception jamming signals c is any number greater than or equal to 1. In this case, separate split circuits corresponding in number to the deception jamming signals are to be added. When the multi-tone radar 100 is used as a radar and for power jamming and deception jamming, the number of radar signals a is 1 to n-1, the number of power jamming signals b is n-1 to 1, and the number of deception jamming signals c is any number greater than or equal to 1. In this case, the multi-tone signals n are assigned to the radar and power jamming uses, and have the relationship of n = a + b, where a is the number of radar signals and b is the number of power jamming signals. In addition, separate split circuits corresponding in number to the deception jamming signals are to be added. When the multi-tone radar 100 is used simply for jamming, the number of radar signals a is 0, the number of power jamming signals b is n, and the number of deception jamming signals c is any number greater than or equal to 1. In this case, separate split circuits corresponding in number to the deception jamming signals are to be added.

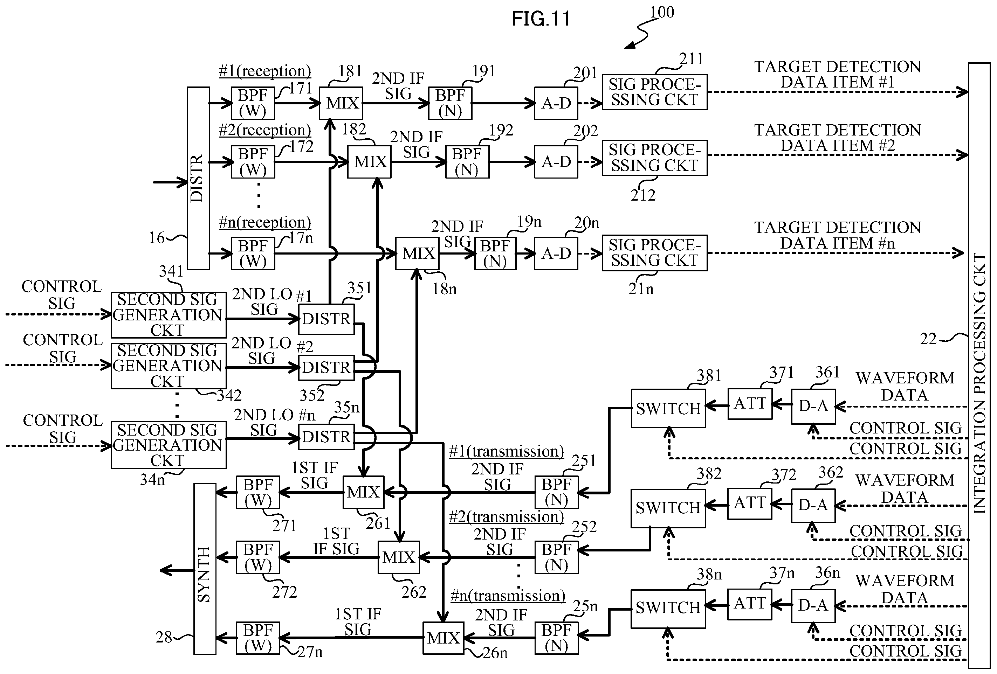

The structure of the multi-tone radar 100 used as a radar and for power jamming is described with reference to FIG. 11. In the example described below, a jamming signal used for power jamming is referred to as a power jamming signal. In FIG. 11, the components upstream from the distributor 16 in the reception system and the components downstream from the synthesizer 28 in the transmission system are the same as the corresponding components in Embodiment 1, and thus are not illustrated. The integration processing circuit 22 in the multi-tone radar 100 switches the split circuits (transmission) from radar use to jamming use or from jamming use to radar use based on the search result from the ESM device or the RWR device. The integration processing circuit 22 generates radar-use waveform data and jamming-use waveform data, outputs radar-use waveform data to split circuits (transmission) switched to radar use, and outputs jamming-use waveform data to split circuits (transmission) switched to jamming use.

In addition to the BPFs (narrow) 251 to 25n, the mixers 261 to 26n, and the BPFs (wide) 271 to 27n, the split circuits (transmission) #1 to #n include D-A converters 361 to 36n that DA-convert waveform data output from the integration processing circuit 22, attenuators (ATTs) 371 to 37n that modulate the amplitude of jamming-use second IF signals resulting from D-A conversion of the jamming-use waveform data based on a control signal output from the integration processing circuit 22, and switches 381 to 38n that modulate the pulse of the amplitude-modulated jamming-use second IF signals based on a control signal output from the integration processing circuit 22. In this example, n is the number of divisions, or the number of multi-tone signals. The second signal generation circuits 341 to 34n generate second Lo signals #1 to #n based on an input control signal, and input the second Lo signals #1 to #n to the mixers in the corresponding split circuits (transmission). The second signal generation circuits 341 to 34n generate, for example, noise or sweep signals as the second Lo signals input into the mixers in the corresponding split circuits (transmission) assigned to jamming use, and generate, for example, continuous waves (CWs) as the second Lo signals input into the mixers in the corresponding split circuits (transmission) for radar use.

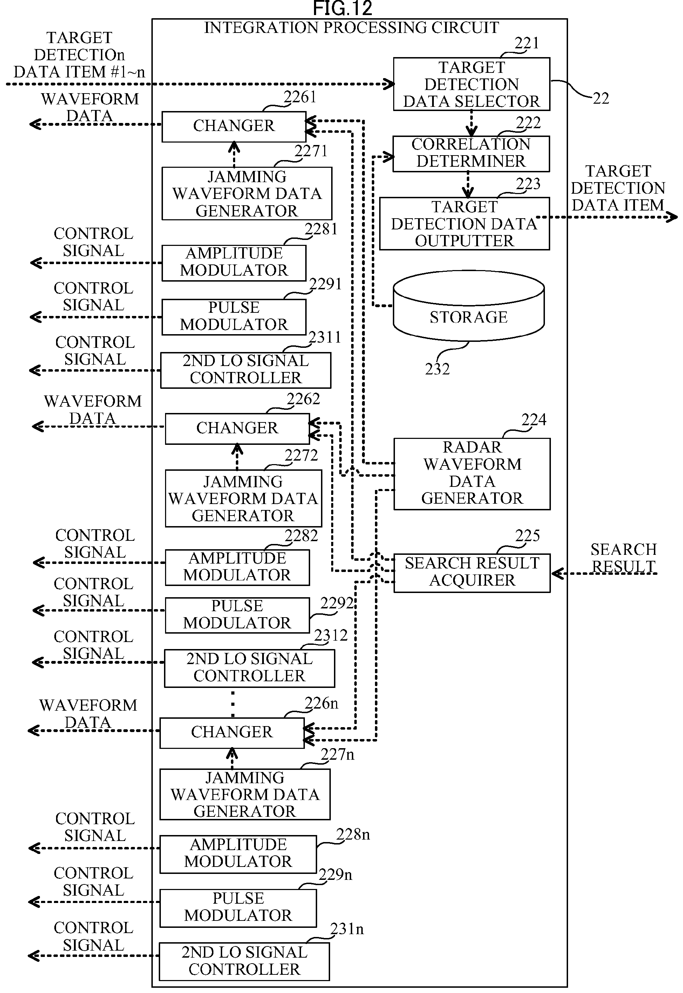

Example components of the integration processing circuit 22 are now described with reference to FIG. 12. In addition to the target detection data selector 221, the correlation determiner 222, the target detection data outputter 223, and the radar waveform data generator 224, the integration processing circuit 22 includes a search result acquirer 225 that acquires search results from the ESM device or the RWR device. The integration processing circuit 22 includes, for the respective split circuits #1 to #n, changers 2261 to 226n that switch the split circuits to radar use or jamming use, jamming waveform data generators 2271 to 227n that generate jamming-use waveform data, amplitude modulators 2281 to 228n that transmit control signals to the ATTs 371 to 37n, pulse modulators 2291 to 229n that transmit control signals to the switches 381 to 38n, and second Lo signal controllers 2311 to 231n that output control signals to the second signal generation circuits 341 to 34n.

The integration processing circuit 22 assigns at least one or all of the multiple split circuits to radar-use split circuits or jamming-use split circuits for power jamming. The search result acquirer 225 assigns, as the power jamming signal, a multi-tone signal in the frequency range including the frequency of a radar wave of concern included in the search results from the ESM device or the RWR device, and outputs an instruction signal instructing the changer of the corresponding split circuit to switch from radar use to jamming use. When receiving the instruction signal with an instruction of switching from radar use to jamming use from the search result acquirer 225, the changers 2261 to 226n switch the corresponding split circuits from radar use to jamming use. The radar waveform data generator 224 distributes the generated radar-use waveform data to the changers 2261 to 226n. The jamming waveform data generators 2271 to 227n generate jamming-use waveform data and transmit the jamming-use waveform data to the changers 2261 to 226n. The jamming-use waveform data is, for example, noise or sweep. To switch the corresponding split circuits to jamming use, the changers 2261 to 226n output the jamming-use waveform data to the corresponding D-A converters 361 to 36n. To switch the corresponding split circuits to radar use, the changers 2261 to 226n output radar-use waveform data to the corresponding D-A converters 361 to 36n.

When the corresponding split circuits (transmission) are switched to jamming use, the amplitude modulators 2281 to 228n output control signals to the ATTs 371 to 37n and perform amplitude modulation. When the corresponding split circuits (transmission) are switched to jamming use, the pulse modulators 2291 to 229n output control signals to the switches 381 to 38n and perform pulse modulation. When the split circuits (transmission) are in radar use, amplitude modulation and pulse modulation are not performed. When the split circuits (transmission) are switched to jamming use and a jamming wave is superimposed with the second Lo signal, the second Lo signal controllers 2311 to 231n output control signals for setting, for example, noise or sweep to the second signal generation circuits 341 to 34n.

With reference to FIGS. 11 and 12, the use of a multi-tone signal as a radar signal and the use of a multi-tone signal assigned as a power jamming signal are described using the split circuit (transmission) #1. When the multi-tone signal of the split circuit (reception) #1 is used as a radar signal, the changer 2261 outputs radar-use waveform data generated and distributed by the radar waveform data generator 224 to the D-A converter 361. The radar-use waveform data output from the changer 2261 is DA-converted by the D-A converter 361, and a radar-use second IF signal is output. The radar-use second IF signal passes through the ATT 371 and the switch 381, and is then band-limited by the BPF (narrow) 251. In this case, the ATT 371 and the switch 381 do not perform amplitude modulation and pulse modulation.

The radar-use second IF signal that has passed through the BPF (narrow) is converted to a radar-use first IF signal by the mixer 261 using the second Lo signal #1, and band-limited by the BPF (wide) 271. The radar-use first IF signal that has passed through the BPF (wide) 271 is synthesized with first IF signals of the split circuits (transmission) #2 to #n by the synthesizer 28 into a multi-tone signal.

To assign the multi-tone signal of the split circuit (transmission) #1 to a power jamming signal, the search result acquirer 225 instructs the changer 2261 for the split circuit (transmission) #1 to switch the split circuit (transmission) #1 from radar use to jamming use. When instructed by the search result acquirer 225 to switch the split circuit (transmission) #1 from radar use to jamming use, the changer 2261 outputs jamming-use waveform data generated by the jamming waveform data generator 2271 to the D-A converter 361.

The D-A converter 361 DA-converts the jamming-use waveform data output from the changer 2261, and outputs a jamming-use second IF signal. The ATT 371 modulates the amplitude of the jamming-use second IF signal output from the D-A converter 361 based on a control signal from the amplitude modulator 2281. The switch 381 modulates the pulse of the amplitude-modulated jamming-use second IF signal based on a control signal from the pulse modulator 2291, and outputs the pulse-modulated jamming-use second IF signal to the BPF (narrow) 251. The pulse-modulated jamming-use second IF signal is band-limited by the BPF (narrow) 251. The jamming-use second IF signal that has passed through the BPF (narrow) is converted by the mixer 261 to a jamming-use first IF signal, and band-limited by the BPF (wide) 271. The jamming-use first IF signal that has passed through the BPFs (wide) 271 to 27n is synthesized by the synthesizer 28 with first IF signals of the split circuits (transmission) #2 to #n into a multi-tone signal. When a jamming wave is superimposed with the second Lo signal, the second Lo signal controller 2311 outputs a control signal to the second signal generation circuit 341 for setting, for example, noise or sweep, and thus can expand the bandwidth of the jamming-use first IF signal output from the mixer 261.

Although the components downstream from the synthesizer 28 are not illustrated, the multi-tone signal is upconverted by the mixer 29 with a first Lo signal, and converted to an RF signal. The RF signal is limited to the frequency band that is set by the filter bank 30, amplified by the amplifier 31, and then transmitted by the antenna 11 through the transmission-reception switch 12 as a power jamming signal and a radar signal.

When the frequency of the radar wave of concern varies and deviates from the frequency range of the multi-tone signal of the split circuit (transmission) #1, the search result acquirer 225 instructs the changer 2261 for the split circuit (transmission) #1 to switch the split circuit (transmission) #1 from jamming use to radar use. When instructed by the search result acquirer 225 to switch the split circuit (transmission) #1 from jamming use to radar use, the changer 2261 outputs the radar-use waveform data generated and distributed by the radar waveform data generator 224 to the D-A converter 361.

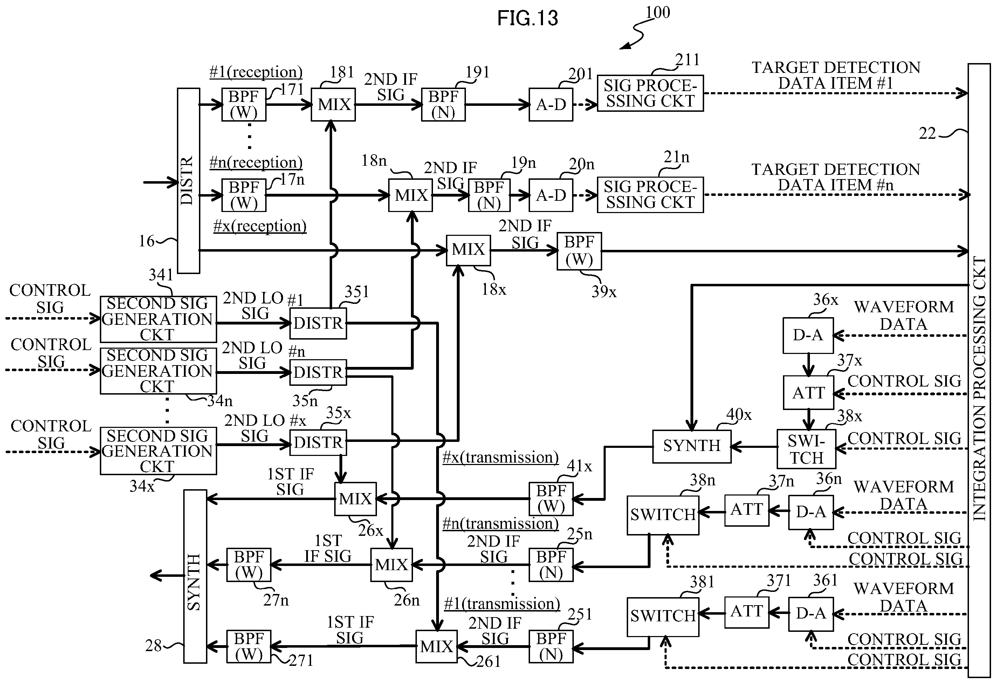

The multi-tone radar 100 used as a radar and for power jamming and deception jamming is described now with reference to FIG. 13. In FIG. 13, the components upstream from the distributor 16 in the reception system and the components downstream from the synthesizer 28 in the transmission system are the same as the corresponding components in Embodiment 1, and thus are not illustrated. In addition to the split circuits #1 to #n, the multi-tone radar 100 includes a jamming-use split circuit #x. In the figure, a split circuit (reception) #x and a split circuit (transmission) #x are indicated as #x (reception) and #x (transmission).

Power jamming is performed as described above with reference to FIGS. 11 and 12. The split circuit #x for deception jamming is described now. In the example described below, a jamming signal for deception jamming is referred to as a deception jamming signal. The split circuit (reception) #x receives a radar wave of concern. Although components upstream from the distributor 16 are not illustrated, the radar wave of concern received by the antenna 11 is amplified by the amplifier 13 after passing through the transmission-reception switch 12 together with an echo signal. The amplified radar wave of concern and the amplified echo signal are limited to a set frequency band by the filter bank 14, and converted by the mixer 15 to a first IF signal using a first Lo signal. The first IF signal output from the mixer 15 is distributed to the split circuits (reception) #1 to #n and the split circuit (reception) #x by the distributor 16. In this state, the first IF signal of the radar wave of concern is distributed to the split circuit (reception) #x based on the search result of the radar wave of concern.

The split circuit (reception) #x includes a mixer 18x that is the same as the mixers 181 to 18n. The first IF signal of the radar wave of concern is converted by the mixer 18x to a second IF signal of the radar wave of concern using a second Lo signal #x generated by a second signal generation circuit 34x.

In addition to the mixer 18x, the split circuit (reception) #x includes a BPF (wide) 39x that band-limits the second IF signal of the radar wave of concern output from the mixer 18x. To maximize the jamming bandwidth for deception jamming, the band limited by the BPF (wide) 39x has a range substantially equal to the hopping range and the agility range, in the same manner as with the bands limited by the BPFs (wide) 171 to 17n. The second IF signal of the radar wave of concern that has passed through the BPF (wide) 39x is input into the integration processing circuit 22. The waveform of the second IF signal of the radar wave of concern input into the integration processing circuit 22 is primarily stored. The integration processing circuit 22 outputs the second IF signal having the waveform primarily stored.

The split circuit (transmission) #x includes a mixer 26x that is the same as mixers 261 to 26n, a D-A converter 36x that is the same as the D-A converters 361 to 36n, an ATT 37x that is the same as the ATTs 371 to 37n, and a switch 38x that is the same as the switches 381 to 38n. The D-A converter 36x DA-converts jamming-use waveform data output from the integration processing circuit 22, and generates and outputs a jamming-use second IF signal. The ATT 37x modulates the amplitude of the jamming-use second IF signal output from the D-A converter 36x based on a control signal from the integration processing circuit 22. The switch 38x modulates the pulse of the amplitude-modulated jamming-use second IF signal based on a control signal from the integration processing circuit 22.

The split circuit (transmission) #x includes a synthesizer 40x and a BPF (wide) 41x, in addition to the mixer 26x, the D-A converter 36x, the ATT 37x, and the switch 38x. The synthesizer 40x synthesizes the pulse-modulated jamming-use second IF signal with a second IF signal of the waveform of the radar wave of concern output from the integration processing circuit 22 and outputs a deception jamming-use second IF signal. The BPF (wide) 41x band-limits the deception jamming-use second IF signal output from the synthesizer 40x. The BPF (wide) 41x is the same as the BPF (wide) 39x. The deception jamming-use second IF signal that has passed through the BPF (wide) 41x is converted by the mixer 26x to a deception jamming-use first IF signal. The deception jamming-use first IF signal is synthesized by the synthesizer 28 with the first IF signals of the split circuits (transmission) #1 to #n into a multi-tone signal.

Although the components downstream from the synthesizer 28 are not illustrated, the multi-tone signal is upconverted by the mixer 29 with a first Lo signal, and converted to an RF signal. The RF signal is limited to a frequency band that is set by the filter bank 30, amplified by the amplifier 31, and then transmitted by the antenna 11 through the transmission-reception switch 12 as a deception jamming signal and a radar signal. When at least any of the split circuits #1 to #n is assigned to power jamming, the RF signal is transmitted as a deception jamming signal, a power jamming signal, and a radar signal.

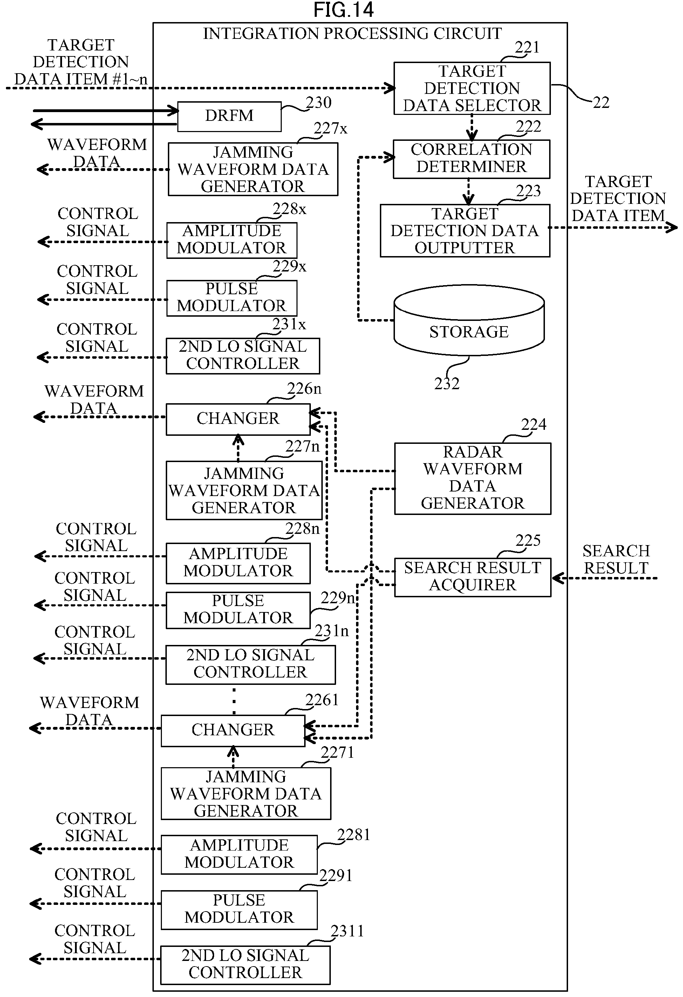

Example components of the integration processing circuit 22 are now described with reference to FIG. 14. In addition to the target detection data selector 221, the correlation determiner 222, the target detection data outputter 223, the radar waveform data generator 224, the search result acquirer 225, the changers 2261 to 226n, the jamming waveform data generators 2271 to 227n, the amplitude modulators 2281 to 228n, the pulse modulators 2291 to 229n, the second Lo signal controllers 2311 to 231n that output control signals to the second signal generation circuits 341 to 34n, the integration processing circuit 22 includes a jamming waveform data generator 227x that generates jamming-use waveform data corresponding to the split circuit #x, an amplitude modulator 228x that transmits a control signal to the ATT 37x, a pulse modulator 229x that transmits a control signal to the switch 38x, and a second Lo signal controller 231x that outputs a control signal to the second signal generation circuit 34x. The integration processing circuit 22 further includes a digital radio frequency memory (DRFM) 230 that temporarily stores the waveform of the second IF signal of the input radar wave of concern, and outputs the second IF signal of the stored waveform after a set retardation time. The DRFM 230 AD-converts the waveform of the second IF signal of the input radar wave of concern, temporarily stores digital data in a memory, DA-converts the stored digital data after the set retardation time has passed, and outputs the second IF signal of the waveform of the radar wave of concern.

The jamming-use second IF signal transmitted from the antenna 11 is received by a radar of an aircraft of concern later than an actual echo wave of the radar wave of concern. The frequency of a deception jamming-use second IF signal resulting from synthesizing the jamming-use second IF signal with a waveform that is the same as the waveform of the second IF signal of the radar wave of concern stored in the DRFM 230 is converted, and the resulting deception jamming-use second IF signal is transmitted from the antenna 11 as a deception jamming signal to cause the radar of the aircraft of concern to detect a false distance to the specific aircraft.

In the present embodiment, to implement frequency hopping or frequency agility of a radar signal, the frequency of the second Lo signals #1 to #n generated by the second signal generation circuits 341 to 34n for radar signal use is varied. However, not to implement frequency hopping and frequency agility of a jamming signal, the frequency of the second Lo signal #x generated by the second signal generation circuit 34x for jamming signal use is not varied. When the radar wave of concern undergoes a frequency hopping or frequency agility operation, the second Lo signal #x may be varied based on the varying frequency of the radar wave of concern.

The multi-tone radar 100 used as a radar and for deception jamming includes, for example, the second signal generation circuit 34x, a distributor 35x, and the split circuit #x illustrated in FIG. 13, in addition to the components illustrated in FIG. 1. The integration processing circuit 22 includes, in addition to the components illustrated in FIG. 5, the jamming waveform data generator 227x, the amplitude modulator 228x, the pulse modulator 229x, the DRFM 230, and the second Lo signal controller 231x as illustrated in FIG. 14. The split circuit #x is a deception jamming-use split circuit, and the split circuits #1 to #n are radar-use split circuits.

For example, the multi-tone radar 100 simply for jamming includes the same components as illustrated in FIG. 13. The integration processing circuit 22 simply for jamming includes components eliminating, from the components illustrated in FIG. 14, the target detection data selector 221, the correlation determiner 222, the target detection data outputter 223, the radar waveform data generator 224, the search result acquirer 225, and the changers 2261 to 226n. The jamming waveform data generators 2271 to 227n may generate jamming-use waveform data and output the jamming-use waveform data to the corresponding D-A converters 361 to 36n, or may distribute the jamming-use waveform data to one of the D-A converters 361 to 36n corresponding to one jamming waveform data generator. The split circuit #x is a deception jamming-use split circuit, and the split circuits #1 to #n are power jamming-use split circuits.

In Embodiment 2 as described above, at least one or all of the multi-tone signals of the multi-tone radar may be used as jamming signals for the radar wave of concern. The multi-tone radar 100 according to Embodiment 2 includes the split circuits corresponding to the frequency ranges resulting from dividing the transmission-reception frequency range of the multi-tone radar, and the split circuits include the radar-use split circuit and the jamming-use split circuit, which allows expanding the bandwidth of the radar and the EW system, and suppressing the increase in the overall hardware scale.

Generally, the EW systems have time intervals during which jamming signals are not transmitted, for example, stopping the transmission of jamming signals while radar signals are being transmitted, or switching jamming frequencies by time control when dealing with multiple radars of concern. This results in a reduction of jamming effectiveness. In contrast, the multi-tone radar 100 according to Embodiment 2 can simultaneously transmit radar signals and jamming signals since the frequencies of the individual signals of the wideband multi-tone radar are sufficiently separated. By increasing the number of jamming signals to be assigned, simultaneous jamming of multiple radars of concern can be achieved. As a result, the reduction of jamming effectiveness due to time control can be prevented.

In Embodiments 1 and 2, the correlation determiner 222 in the integration processing circuit 22 performs correlation determination between each selected target detection data item and a corresponding past target detection data item. The correlation determiner 222 rejects a target detection data item not satisfying the correlation condition associated with at least one of, for example, the bearing, the distance, the velocity, or the travel direction of the target and accepts a target detection data item satisfying the correlation condition. The target detection data outputter 223 outputs the target detection data item accepted by the correlation determiner 222. However, the structure is not limited to this example. The target detection data outputter 223 may output a target detection data item selected by the target detection data selector 221. In this case, the integration processing circuit 22 may eliminate the correlation determiner 222.

In Embodiments 1 and 2, the multi-tone radar 100 causes all the multiple split circuits to operate to transmit and receive multi-tone signals, but the structure is not limited to this example. The number of split circuits to be operated among the multiple split circuit may be specified. For example, the multi-tone radar 100 may cause one of the multiple split circuits to operate to transmit and receive a single tone, or cause any two or more of the multiple split circuits to operate to transmit and receive multi-tone signals. In another example, the multi-tone radar 100 may switch the number of split circuits to be operated to switch between one-tone transmission-reception and multi-tone transmission-reception.

In Embodiments 1 and 2 described above, the multi-tone radar 100 detects jamming to avoid effects of radar jamming from an ECM device, but the purpose of the detection is not limited to this. For example, the multi-tone radar 100 may detect clutter as jamming to be less susceptible to clutter or other natural physical phenomena.

Although one or more embodiments have been described in detail, the present disclosure is not limited to the above embodiments, and the elements or structures in the embodiments may be modified or replaced in various manners without departing from the scope of claims.

Various aspects of the present disclosure are described below as appendices.

(Appendix 1) A multi-tone radar for transmitting a multi-tone signal as a radar signal and a jamming signal for jamming a radar wave of concern, and receiving a multi-tone signal containing the radar signal reflected from a target as an echo signal, the multi-tone radar comprising:
a plurality of split circuits each to transmit the multi-tone signal within a corresponding frequency range among a plurality of frequency ranges resulting from dividing a transmission-reception frequency range of the multi-tone radar, wherein
the plurality of split circuits include a radar-use split circuit to transmit the multi-tone signal as the radar signal, and a jamming-use split circuit to transmit the multi-tone signal as the jamming signal.

(Appendix 2) The multi-tone radar according to appendix 1, further comprising:
an integration processing circuit to assign each of at least one or all of the plurality of split circuits to the radar-use split circuit or the jamming-use split circuit for power jamming, wherein
the integration processing circuit designates a split circuit, of the plurality of split circuits, assigned to a frequency range, among the plurality of frequency ranges, including a frequency of the radar wave of concern, to the jamming-use split circuit.

(Appendix 3) The multi-tone radar according to appendix 2, wherein
the integration processing circuit includes a changer to switch between radar-use waveform data and jamming-use waveform data to output the radar-use waveform data to the radar-use split circuit and output the jamming-use waveform data to the jamming-use split circuit.

(Appendix 4) The multi-tone radar according to appendix 3, wherein
the integration processing circuit includes a search result acquirer to acquire a result of search of the jamming signal, and
the changer switches between the radar-use waveform data and the jamming-use waveform data based on an instruction signal output from the search result acquirer.

(Appendix 5) The multi-tone radar according to any one of appendices 1 to 4, further comprising:
a first signal generation circuit to generate a first local signal input into a mixer common to the plurality of split circuits, the first local signal defining the transmission-reception frequency range of the multi-tone radar; and
a plurality of second signal generation circuits each to generate a second local signal input into an individual mixer for a corresponding split circuit of the plurality of split circuits, the second local signal defining a frequency range for the corresponding split circuit among the plurality of frequency ranges.

(Appendix 6) The multi-tone radar according to appendix 5, wherein
the integration processing circuit individually controls a second signal generation circuit corresponding to the jamming-use split circuit among the plurality of second signal generation circuits, and generates a signal for power jamming as the second local signal.

(Appendix 7) The multi-tone radar according to appendix 5 or 6, wherein
in a case where the radar wave of concern undergoes a frequency hopping or frequency agility operation, the integration processing circuit individually controls a second signal generation circuit corresponding to the jamming-use split circuit among the plurality of second signal generation circuits, and causes a frequency of the second local signal to vary based on a varying frequency of the radar wave of concern.

(Appendix 8) The multi-tone radar according to any one of appendices 1 to 7, wherein
the jamming-use split circuit includes a deception jamming-use split circuit that transmits a deception jamming signal generated based on the received radar wave of concern.

(Appendix 9) The multi-tone radar according to appendix 8, wherein
the integration processing circuit further includes a digital radio frequency memory (DRFM) to temporarily store a waveform of the radar wave of concern received by the deception jamming-use split circuit, and output a signal of the waveform of the radar wave of concern after a set retardation time, and
the deception jamming-use split circuit generates the deception jamming signal based on the signal of the waveform of the radar wave of concern output from the DRFM.

(Appendix 10) The multi-tone radar according to appendix 8 or 9, further comprising:
an antenna; and
a transmission-reception switch to switch the antenna between transmission and reception, wherein
the transmission-reception switch switches between transmission of the radar signal and the jamming signal and reception of the echo signal and the radar wave of concern.

(Appendix 11) The multi-tone radar according to any one of appendices 1 to 10, wherein
the plurality of frequency ranges include adjacent frequency ranges with frequency separation greater than or equal to 1.0/τ Hz, where τ is a pulse width of the multi-tone signal.

(Appendix 12) A transmission-reception method for a multi-tone radar for transmitting a multi-tone signal as a radar signal and a jamming signal for jamming a radar wave of concern, and receiving a multi-tone signal containing the radar signal reflected from a target as an echo signal, the transmission-reception method comprising:
transmitting, by each of a plurality of split circuits, the multi-tone signal within a corresponding frequency range among a plurality of frequency ranges resulting from dividing a transmission-reception frequency range of the multi-tone radar; and
transmitting, by at least one split circuit of the plurality of split circuits, the multi-tone signal as the jamming signal, and transmitting, by remaining split circuits of the plurality of split circuits, the multi-tone signal as the radar signal.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2023-171600 filed on October 2, 2023, the entire disclosure of which is incorporated by reference herein.

### Reference Signs List

11 Antenna
12 Transmission-reception switch
13, 31 Amplifier
14, 30 Filter bank
15, 29, 181 to 18n, 18x, 261 to 26n, 26x Mixer
16, 24, 33, 351 to 35n, 35x Distributor
22 Integration processing circuit
23, 361 to 36n, 36x D-A converter
28, 40x Synthesizer
32 First signal generation circuit
100 Multi-tone radar
171 to 17n, 271 to 27n, 39x, 41x BPF (wide)
191 to 19n, 251 to 25n BPF (narrow)
201 to 20n A-D converter
211 to 21n Signal processing circuit
221 Target detection data selector
222 Correlation determiner
223 Target detection data outputter
224 Radar waveform data generator
225 Search result acquirer
2261 to 226n Changer
2271 to 227n, 227x Jamming waveform data generator
2281 to 228n, 228x Amplitude modulator
2291 to 229n, 229x Pulse modulator
230 DRFM
2311 to 231n, 231x Second Lo signal controller
232 Storage
341 to 34n, 34x Second signal generation circuit
371 to 37n, 37x ATT
381 to 38n, 38x Switch

## Claims

1. A multi-tone radar for transmitting a multi-tone signal as a radar signal and a jamming signal for jamming a radar wave of concern, and receiving a multi-tone signal containing the radar signal reflected from a target as an echo signal, the multi-tone radar comprising:
a plurality of split circuits each to transmit the multi-tone signal within a corresponding frequency range among a plurality of frequency ranges resulting from dividing a transmission-reception frequency range of the multi-tone radar, wherein
the plurality of split circuits include a radar-use split circuit to transmit the multi-tone signal as the radar signal, and a jamming-use split circuit to transmit the multi-tone signal as the jamming signal.

2. The multi-tone radar according to claim 1, further comprising:
an integration processing circuit to assign each of at least one or all of the plurality of split circuits to the radar-use split circuit or the jamming-use split circuit for power jamming, wherein
the integration processing circuit designates a split circuit, of the plurality of split circuits, assigned to a frequency range, among the plurality of frequency ranges, including a frequency of the radar wave of concern, to the jamming-use split circuit.

3. The multi-tone radar according to claim 2, wherein
the integration processing circuit includes a changer to switch between radar-use waveform data and jamming-use waveform data to output the radar-use waveform data to the radar-use split circuit and output the jamming-use waveform data to the jamming-use split circuit.

4. The multi-tone radar according to claim 3, wherein
the integration processing circuit includes a search result acquirer to acquire a result of search of the jamming signal, and
the changer switches between the radar-use waveform data and the jamming-use waveform data based on an instruction signal output from the search result acquirer.

5. The multi-tone radar according to any one of claims 1 to 4, further comprising:
a first signal generation circuit to generate a first local signal input into a mixer common to the plurality of split circuits, the first local signal defining the transmission-reception frequency range of the multi-tone radar; and
a plurality of second signal generation circuits each to generate a second local signal input into an individual mixer for a corresponding split circuit of the plurality of split circuits, the second local signal defining a frequency range for the corresponding split circuit among the plurality of frequency ranges.

6. The multi-tone radar according to claim 5, wherein
the integration processing circuit individually controls a second signal generation circuit corresponding to the jamming-use split circuit among the plurality of second signal generation circuits, and generates a signal for power jamming as the second local signal.

7. The multi-tone radar according to claim 5 or 6, wherein
in a case where the radar wave of concern undergoes a frequency hopping or frequency agility operation, the integration processing circuit individually controls a second signal generation circuit corresponding to the jamming-use split circuit among the plurality of second signal generation circuits, and causes a frequency of the second local signal to vary based on a varying frequency of the radar wave of concern.

8. The multi-tone radar according to any one of claims 1 to 7, wherein
the jamming-use split circuit includes a deception jamming-use split circuit that transmits a deception jamming signal generated based on the received radar wave of concern.

9. The multi-tone radar according to claim 8, wherein
the integration processing circuit further includes a digital radio frequency memory (DRFM) to temporarily store a waveform of the radar wave of concern received by the deception jamming-use split circuit, and output a signal of the waveform of the radar wave of concern after a set retardation time, and
the deception jamming-use split circuit generates the deception jamming signal based on the signal of the waveform of the radar wave of concern output from the DRFM.

10. The multi-tone radar according to claim 8 or 9, further comprising:
an antenna; and
a transmission-reception switch to switch the antenna between transmission and reception, wherein
the transmission-reception switch switches between transmission of the radar signal and the jamming signal and reception of the echo signal and the radar wave of concern.

11. The multi-tone radar according to any one of claims 1 to 10, wherein
the plurality of frequency ranges include adjacent frequency ranges with frequency separation greater than or equal to 1.0/τ Hz, where τ is a pulse width of the multi-tone signal.

12. A transmission-reception method for a multi-tone radar for transmitting a multi-tone signal as a radar signal and a jamming signal for jamming a radar wave of concern, and receiving a multi-tone signal containing the radar signal reflected from a target as an echo signal, the transmission-reception method comprising:
transmitting, by each of a plurality of split circuits, the multi-tone signal within a corresponding frequency range among a plurality of frequency ranges resulting from dividing a transmission-reception frequency range of the multi-tone radar.
